# EUROPEAN PATENT APPLICATION

(11) **EP 0 566 996 A2**
(43) Date of publication of application: **27.10.1993**
(21) Application number: 93106154.3
(22) Date of filing: 15.04.1993
(51) Int. Cl.: G05B 19/05

(54) **Programmable controller with erroneous input prevention control circuit**

(30) Priority: 21.04.1992 JP 100881/92
(71) Applicant: HITACHI, LTD., Chiyoda-ku, Tokyo 100 (JP)
(72) Inventor: Uchiyama, Ryoichi, Kitakanbara-gun, Niigata-ken (JP); Fujiwara, Tatsuo, Shibata-shi (JP)
(74) Representative: Strehl Schübel-Hopf Groening & Partner

(57) **Abstract**

A programmable controller comprises a memory section (5) for storing a control program, an operating section (3) connected to the storage section for performing an operation in accordance with the control program, an input section (1) connected to the operating section for taking in a make/break signal of a contact (1s) provided in an external input device, and an output section (2) connected to the operating section for outputting a signal to drive an external load. The input section includes a first input terminal (1a) connected to a power supply (4) which supplies a voltage to the contact, a second input terminal (1d) to which the make/break signal of the contact is inputted through the contact from a second phase of the power supply, a control signal generation circuit (14) connected to the first input terminal for generating an ON signal corresponding to a normal condition of the power supply and an OFF signal corresponding to an abnormal condition of the power supply, an AC input circuit (7) connected to the second input terminal for converting a signal inputted through the contact into a voltage level signal corresponding to the make/break of the contact, and an input data hold circuit (8) connected to an output of the AC input circuit for holding the output signal of the AC input circuit when the OFF signal is received from the control signal generation circuit, whereby a signal from the contact provided in the external input device is prevented from being erroneously inputted when the power supply is cut off.

## Description

### BACKGROUND OF THE INVENTION

The present invention relates to a programmable controller to which an AC ON/OFF signal from an external device operated by an AC power supply is inputted, and more particularly to a programmable controller which includes an input circuit for making the control of an input voltage on the basis of input information.

In the conventional method of power supply cut-off detection in a control device such as a programmable controller (hereinafter referred to as PC), the detection of the cut-off of a power supply of the PC itself or the voltage drop of the power supply is conducted but the detection of the cut-off of a power supply of an external input device for input signal is not conducted. Therefore, under a certain condition of installation of the PC, for example, in the case where the PC is installed apart from the power supply of the external input device for input signal, an input to the PC does not immediately decrease to zero due to the existence of a residual voltage caused by the influence of an AC induction phenomenon from another equipment, thereby resulting in an erroneous operation. In order to prevent such an erroneous input on the PC side, a control program of the PC must be added with a program for prevention of erroneous input at the time of instantaneous cut-off of an AC input power supply or in an OFF condition thereof.

Detailed explanation of the above will now be made.

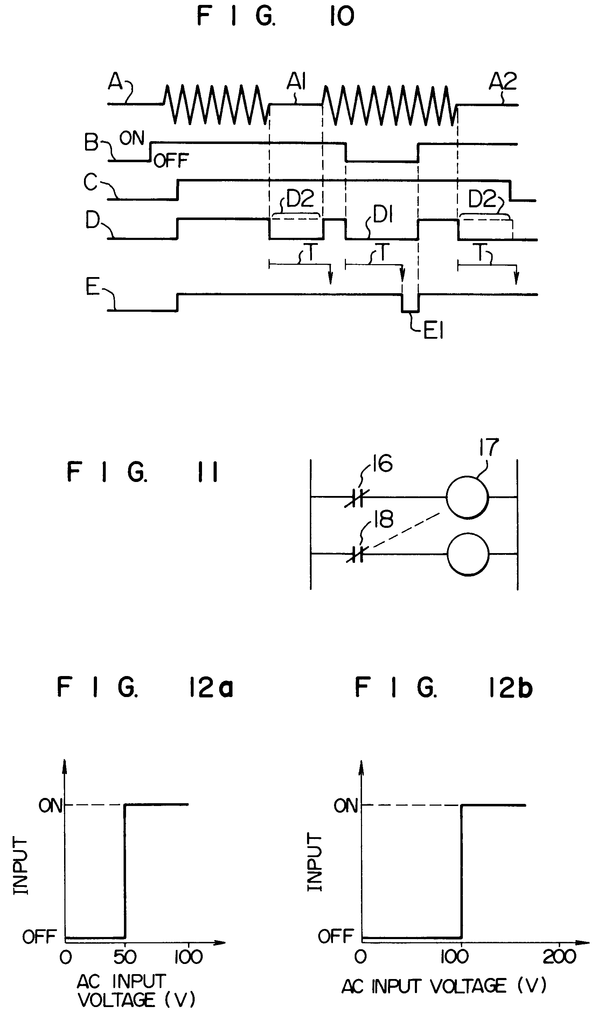

Fig. 9 shows a block diagram of the conventional PC to which a power supply for AC input is connected. The PC 120 is composed of an input section 101 for taking in a signal from an external input device (not shown), an output section 2 for driving an external load (not shown), a memory section 5 including a system memory portion 5a for storing a system program and a program memory 5b for storing a control program, an operating section or central processing unit (hereinafter referred to as CPU) for performing an operation in accordance with the control program, and a power supply section 6. The input section 101 has a common terminal 101c and a plurality of input terminals. One side of a single-phase AC power supply 4 for AC input is connected to the common terminal 101c, and the other side of the power supply 4 is connected to the input terminals 101d through switches 1s provided in the external input device. When the switch 1s is turned on in such a state, a voltage of the AC input power supply 4 is applied to the input terminal 101d, thereby resulting in an input as an ON signal.

Fig. 10 is a timing chart concerning the AC input in the prior art. A waveform A shows the behavior of the AC power supply 4. An A1 portion of the waveform A corresponds to the time of instantaneous cut-off of the AC power supply 4, and an A2 portion thereof corresponds to the case where all power supplies including the power supply section 6 are turned off when the switch 1s is in an ON condition. A waveform B shows the ON/OFF condition of the switch 1s. A waveform C shows the run/stop condition of the PC 120. A waveform D shows an input signal taken in the PC 120. A D1 portion of the waveform D represents a normal input signal based on the OFF condition of the switch 1s when the AC power supply 4 is in an ON condition, and a D2 portion thereof represents an erroneous input generated in the case where the AC power supply 4 is cut off when the switch 1s is in the ON state. A waveform E shows a signal taken in the PC 120 in the case where a counter-measure by the addition of a timer is implemented. An E1 portion of the waveform E represents a normal OFF signal.

The conditions of occurrence of an erroneous input signal will be explained with reference to Figs. 9 and 10.

First, in the case where the AC power supply 4 is normal, an input signal taken in the PC 120, when the switch 1s is turned off in a state in which the AC power supply 4 is in an ON condition, exhibits an OFF signal normally inputted, as shown by the waveform D. However, in a period of time of the A1 portion when the AC power supply 4 is instantaneously cut off, the input signal taken in the PC 120 exhibits an OFF signal or erroneous input signal as shown by the D2 portion of the waveform D, notwithstanding that the switch 1s is in an ON condition, as shown by the waveform B.

In the case where the PC and the switches 1s of the external input device are turned off, AC input signals are all turned off at the point of time when the power supply is turned off. On the other hand, since the PC 120 is designed to withstand the instantaneous power supply cut-off for a fixed time, the operation of the PC 120 is continued for this fixed time even if the power supply section 6 is cut off. Generally, this fixed time is set to be 20 ms. Accordingly, during the fixed time from the cut-off of the power supply section 6 to the stoppage of the PC 120, an input signal as an OFF signal is generated even if the switch 1s is in an ON condition. In the shown example, an erroneous input signal as shown by the portion D2 is generated. Namely, in a period of time when the operation of the PC 120 is continued, an erroneous input signal occurs in the case where the switch 1s is in the ON state even if the AC power source 4 is cut off.

In the prior art, a timer circuit is set or added to a control program as a countermeasure for the above problem so that an input is regarded as being a normal OFF signal in the case where the OFF time or duration of a input signal taken in the PC 120 is equal to or longer than a timer time-up time of and as being an erroneous input signal in the case where the former is shorter than the latter. More particularly, as shown in Fig. 11, a timer circuit 17 is added to a control program so that the timer is operated by a timer contact 18 each time an AC input OFF enters from an AC input signal 16. In the case where an OFF signal is still inputted continuously in spite of the lapse of a predetermined time of recovery from the instantaneous cut-off condition of the AC power supply 4, the OFF signal is regarded as being a normal AC power supply OFF signal. As shown in Fig. 10, the PC is operated such that the input is continuously made or the OFF signal is regarded as being an erroneous input when T > D2 (T: a set operating time of the timer) and the OFF signal is regarded as being a normal OFF signal when T < D1. The waveform E of Fig. 10 shows a taken-in signal after the countermeasure by the addition of the timer and E1 shows a normal OFF signal.

Also, it is preferable that the threshold value for an AC input voltage is set to a value which is about a half of the voltage of the power supply for AC input. Therefore, in the prior art, a plurality of types of input circuit must be prepared according to the power supply voltage for AC input signal, e.g., in Japan, for 100 V circuit and for 200 V circuit. Figs. 12A and 12B show the input versus output characteristics of the circuit for AC 100 V and the circuit for AC 200 V, respectively.

Therefore, the above-mentioned prior art involves the following problems.
(1) The time of take-in of an input OFF signal has a deviation corresponding to the set time of the timer and hence a processing is correspondingly delayed.
(2) It is not possible to input an AC power supply OFF signal shorter than the set time of the timer.
(3) A plurality of types of input circuit must be prepared according to the power supply voltage for AC input signal, e.g., in Japan, for 100 V circuit and for 200 V circuit and hence a threshold value for the AC input voltage is different each time the power supply voltage for AC input of the external input device is changed. This requires the selection of a threshold value and results in uneasy use.

### SUMMARY OF THE INVENTION

An object of the present invention is to provide a programmable controller (PC) including an input circuit in which not only an erroneous input can be prevented by connecting a line to a power supply for AC input signal from an external input device, thereby to detect the cut-off of the power supply for AC input of the external input device and holding the ON/OFF condition of an input signal before the cut-off of the power supply for AC input during a period of time when the power supply for AC input is an OFF condition but also the application to different input voltages for such a wide input voltage range as, e.g. 100-200 V, is enabled by detecting a voltage of the power supply for AC input of the external input device to automatically determine a proper threshold value level.

To that end, according to the present invention, there is provided a programmable controller comprising a memory section for storing a control program, an operating section connected to the storage section for performing an operation in accordance with the control program, an input section connected to the operating section for taking in a make/break signal of a contact provided in an external input device, and an output section connected to the operating section for outputting a signal to drive an external load, in which the input section includes a first input terminal connected to a power supply which supplies a voltage to the contact, a second input terminal to which the make/break (ON/OFF) signal of the contact is inputted through the contact from the power supply, a first circuit connected to the first input terminal for generating a first signal corresponding to a normal condition of the power supply and a second signal corresponding to an abnormal condition of the power supply, a second circuit connected to the second input terminal for converting a signal inputted through the contact into a third signal corresponding to the make/break of the contact, and an input data hold circuit connected to an output of the second circuit for holding the third signal when the second signal is received from the first circuit.

According to a preferred embodiment of the present invention, the input section further includes a reference value generation circuit connected to the first input terminal for generating a reference value based on an input voltage value of the power source in the normal condition and a comparator connected to the reference value generation circuit for comparing the output of the second circuit with the reference value, the output of the second circuit being supplied through the comparator to the input data hold circuit.

According to the present invention, since in preventing an erroneous input at the time of OFF of the power supply for AC input, the input data hold circuit holds a signal corresponding to the make/break of the contact when a signal corresponding to a cut-off condition of the power supply for AC input is received, it is possible to prevent a time lag of take-in of an input OFF signal and to input even a short input signal, thereby allowing a high-reliability control.

Also, there can be provided an effect that a labor including the take-in of a normal input signal by the addition of a timer circuit to a control program and a control based thereon is eliminated, thereby enabling a control with a satisfactory responsibility and an effect that since a proper threshold value can automatically be determined, no change in circuit construction is required even for a change of the voltage of a power supply for an external device and a voltage used can arbitrarily be selected, thereby providing the improvement of easy use.

### BRIEF DESCRIPTION OF THE DRAWINGS

Fig. 1 is a block diagram showing the construction of a programmable controller according to an embodiment of the present invention;
Fig. 2 is a block diagram showing the construction of an erroneous input prevention control circuit in an AC input section of the programmable controller of the embodiment of the present invention;
Fig. 3 is a circuit diagram of the erroneous input prevention control circuit in the programmable controller of the embodiment of the present invention;
Figs. 4a-4g are control timing charts of the erroneous input prevention control circuit in the programmable controller of the embodiment of the present invention, respectively;
Fig. 5 is a circuit diagram of a threshold value control circuit in the programmable controller of the embodiment of the present invention;
Fig. 6 is a waveform diagram showing a relationship between an output level waveform of an AC input circuit, a threshold value and the output of a comparator in the programmable controller of the embodiment of the present invention;
Fig. 7 is a waveform diagram showing threshold levels and an output waveform of the AC input circuit in the programmable controller of the embodiment of the present invention;
Fig. 8 is a circuit diagram showing the construction of the whole of an input circuit in the programmable controller of the embodiment of the present invention;
Fig. 9 shows a block diagram the conventional programmable controller together with the connection of an AC power supply input section;
Fig. 10 is a timing chart for explaining an AC input in the conventional programmable controller;
Fig. 11 is a diagram schematically showing erroneous input prevention by the addition of a timer in the conventional programmable controller; and
Figs. 12a and 12b are diagrams showing the ON-OFF characteristics of the conventional programmable controller for different AC input voltages.

### DESCRIPTION OF THE PREFERRED EMBODIMENTS

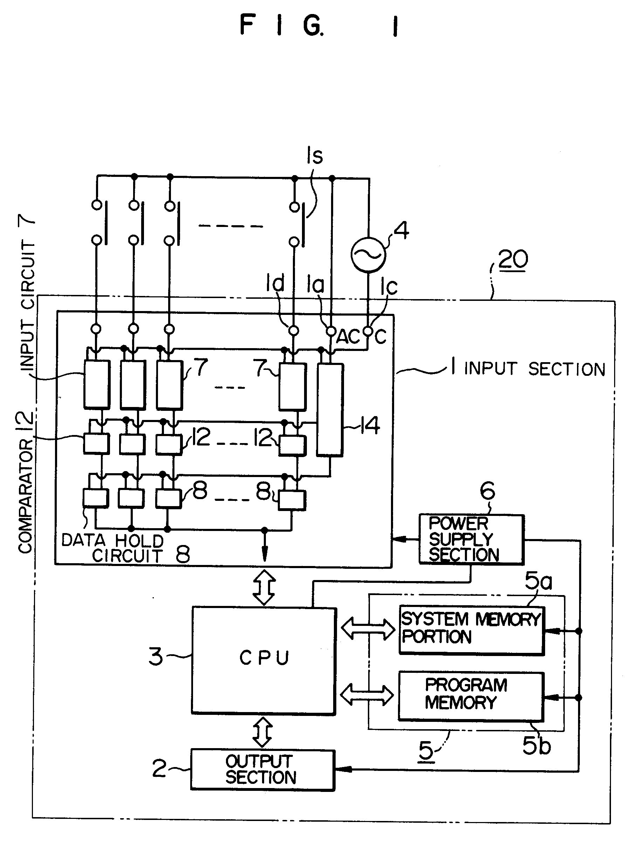

Embodiments of the present invention will now be explained with reference to Figs. 1 to 8.

Fig. 1 is a block diagram showing the construction of a programmable controller (PC) according to an embodiment of the present invention. The PC 20 is composed of an input section 1 for taking in a signal from an external input device (not shown), an output section 2 for outputting a signal which drives an external load (not shown), a memory section 5 including a system memory portion 5a for storing a system program and a program memory 5b for storing a control program, an operating section or central processing unit 3 (hereinafter referred to as CPU) for performing an operation in accordance with the control program, and a power supply section 6.

The input section 1 has a common terminal 1c as a common input terminal to which one side of a single-phase AC power supply 4 for AC input for supplying a voltage to switches 1s as contacts is connected, a plurality of input terminals 1d as a second input terminal to which make/break (ON/OFF) signals of the switches 1s are inputted through the switches 1s from the other side of the AC power supply 4, and an AC input terminal 1a as a first input terminal which is connected to the other side of the AC power supply 4. The switch 1s is provided in the external input device and a signal from the external input device is transmitted in the form of ON/OFF of the switch 1s to the input section 1 through the corresponding input terminal 1d. When the switch 1s is turned on in such a state, a voltage of the AC power source 4 is applied to the corresponding input terminal 1d, thereby resulting in an input as an ON signal.

The connection between the input section 1 and the CPU 3, the connection between the system memory portion 5a and the CPU 3, the connection between the program memory 5b and the CPU 3, and the connection between the output section 2 and the CPU 3 are made by buses (shown by thick arrows in Fig. 1), respectively. The power supply section 6 supplies electric powers necessary for operating the input section 1, the output section 2, the system memory portion 5a, the program memory 5b and the CPU 3, respectively.

The input section 1 in the present embodiment includes AC input circuits 7 as a second circuit which are connected to the common terminal 1c and the input terminals 1d, an erroneous input prevention and threshold value control circuit 14 (hereinafter referred to as control signal generation circuit) as a first circuit which is connected to the common terminal 1c and the AC input terminal 1a, comparators 12 which make the ON/OFF judgement for the outputs of the AC input circuits 7 on the basis of a signal level from the control signal generation circuit 14, and input data hold circuits 8 which hold the outputs of comparators 12 at the timing of a signal from the control signal generation circuit 14 and the outputs of which are connected to the CPU 3 through the bus.

In the present embodiment, a threshold value control circuit 11 is constructed by the control signal generation circuit 14 and the comparators 12, and an erroneous input prevention circuit 9 is constructed by the control signal generation circuit 14 and the input data hold circuits 8.

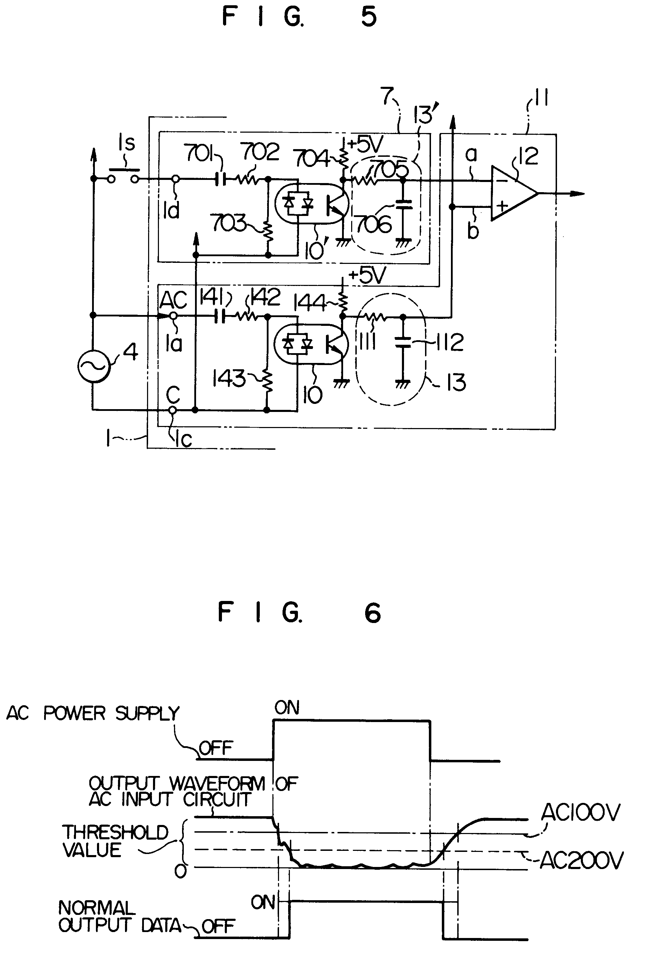

The AC input circuit 7 and the threshold value control circuit 11 will be explained using Figs. 5, 6 and 7.

The AC input circuit 7 includes a signal isolation portion and a voltage level generation portion, as shown in Fig. 5. The signal isolation portion is composed of a series circuit which includes a capacitor 701 and a resistor 702 connected between the input terminal 1d and the common terminal 1c and a parallel circuit which includes the primary side (or light emitter side) of a photo coupler 10' and a resistor 703 connected in series with the series circuit. The capacitor 701 is provided for limiting an input current, and the resistor 702 is provided for limiting a rush current upon input ON. The primary side of the photo coupler 10' has light emitting diodes connected in parallel to each other and in reverse directions and emits light for a signal of either positive or negative direction. The resistor 703 is a resistor for input sensitivity adjustment and causes the light emitting diode to emit light in accordance with a voltage division ratio to the impedance of the series circuit of the capacitor 701 and the resistor 702 when a voltage between the input terminal 1d and the common terminal 1c is equal to or higher than a predetermined voltage. The capacitor 701 has the impedance of several-ten kilo-ohms and the resistors 702 and 703 have the resistance values of several-hundred ohms and several kilo-ohms, respectively, thereby setting the circuit constant so that a current of about 10 mA flows through the primary side of the photo coupler 10' for an input voltage of 100 V or 200 V. The secondary side of the photo coupler 10' includes a photo diode which has an emitter grounded and a collector connected to a power supply voltage + 5 V through a resistor 704. The resistor 704 is provided for supplying a high level of the output of the photo coupler. The primary and secondary sides can be isolated from each other by use of the photo coupler 10'. Thereby, an AC waveform inputted from the primary side can be transmitted as a full-wave rectified waveform to the secondary side by the photo coupler 10'.

On the secondary side of the photo coupler 10', an integrating circuit 13' including a resistor 705 and a capacitor 706 is connected to the collector of the photo coupler 10' for integrating the output of the photo coupler 10' to provide a voltage level which is to be outputted.

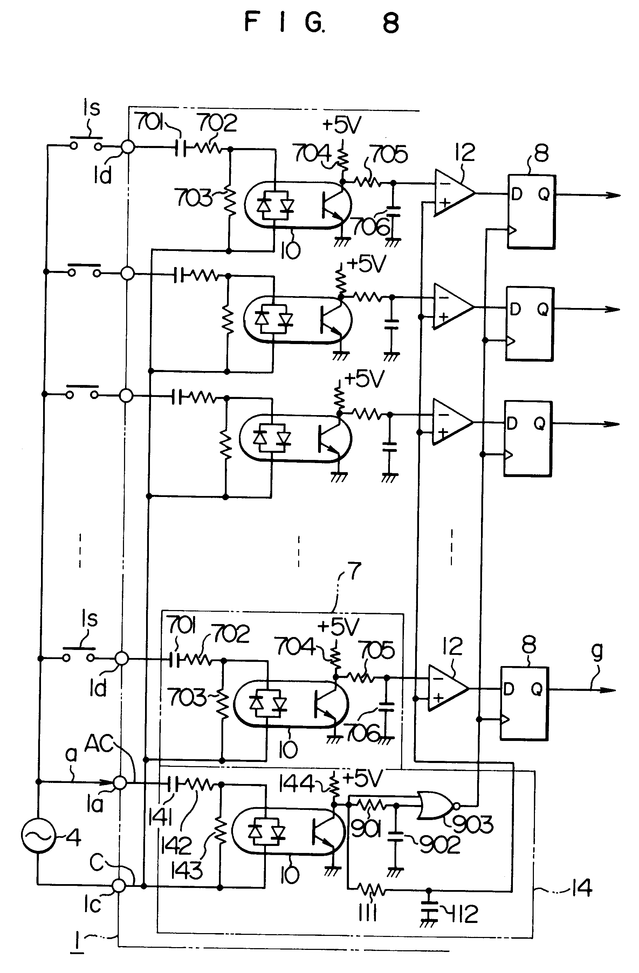

The control signal generation circuit 14 includes a signal isolation portion, a pulse generation portion and a reference voltage level generation portion, as shown in Fig. 8. Referring to Fig. 5, the threshold value control circuit 11 includes the signal isolation portion and the reference voltage level generation portion of the control signal generation circuit 14 and further includes the comparator 12 connected to the reference voltage level generation portion.

The signal isolation portion of the threshold value control circuit 11 is composed of a series circuit which includes a capacitor 141 and a resistor 142 connected between the AC input terminal 1a and the common terminal 1c and a parallel circuit which includes the primary side (or light emitter side) of a photo coupler 10 and a resistor 143 connected in series with the series circuit. The capacitor 141 is provided for limiting an input current, and the resistor 142 is provided for limiting a rush current upon input ON. The primary side of the photo coupler 10 has light emitting diodes connected in parallel to each other and in reverse directions and emits light for a signal of either positive or negative direction. The resistor 143 is a resistor for input sensitivity adjustment and causes the light emitting diode to emit light in accordance with a voltage division ratio to the impedance of the series circuit of the capacitor 141 and the resistor 142 when a voltage between the AC input terminal 1a and the common terminal 1c is equal to or higher than a predetermined voltage. The capacitor 141 has the impedance of several-ten kilo-ohms and the resistors 142 and 143 have the resistance values of several-hundred ohms and several kilo-ohms, respectively, thereby setting the circuit constant so that a current of about 10 mA flows through the primary side of the photo coupler 10 for an input voltage of 100 V or 200 V. The secondary side of the photo coupler 10 includes a photo diode which has an emitter grounded and a collector connected to a power supply voltage + 5 V through a resistor 144. The resistor 144 is provided for supplying a high level of the output of the photo coupler. The primary and secondary sides can be isolated from each other by use of the photo coupler 10. Thereby, the photo coupler 10 can transmit an AC input a on the primary side thereof to the secondary side thereof as a full-wave rectified waveform b.

On the secondary side of the photo coupler 10, an integrating circuit 13 including a resistor 111 and a capacitor 112 is connected to the collector of the photo coupler 10. The output of the photo coupler 10' is connected to a plus-side input terminal of the comparator 12. On the other hand, the output of the AC input circuit 7 is connected to a minus-side input terminal of the comparator 12.

The threshold value control circuit 11 has a function of automatically setting a threshold value. This function will now be explained.

A voltage from the power supply 4 for AC input is applied as an input to the threshold value control circuit 11 and this input signal is transmitted to the secondary side of the photo coupler 10. On the secondary side of the photo coupler 10, the integrating circuit 13 extracts DC components. A integration time constant of the integrating circuit 13 is made large so that ripple voltages are removed and a variation in output level is minimized even if the power supply 4 for AC input is instantaneously cut off. A DC level of the output of the integrating circuit 13 changes in accordance with the voltage of the power supply 4 for AC input which is inputted.

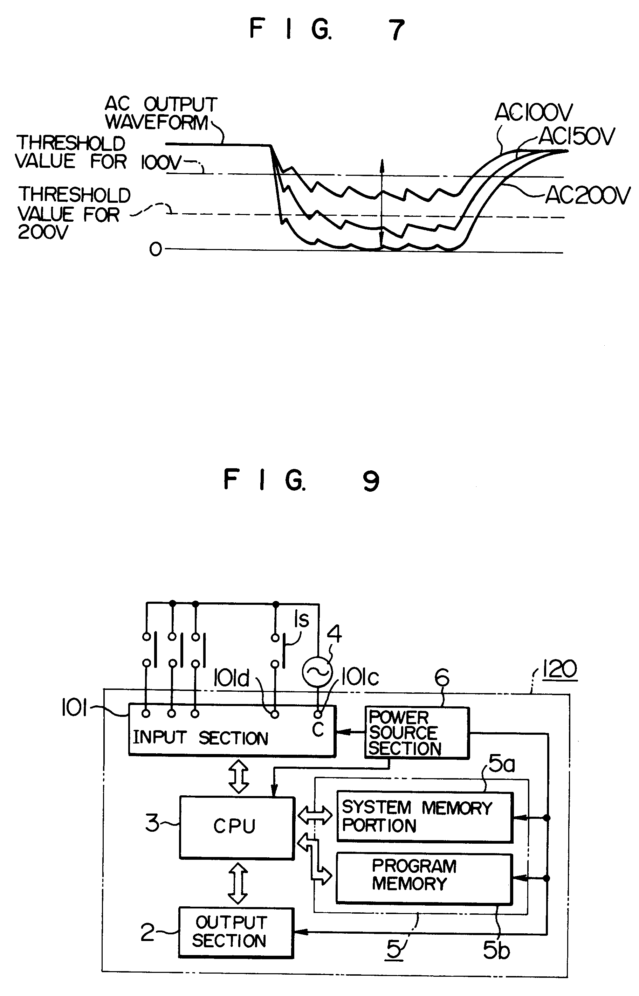

When the level of an AC voltage being inputted is increased, the level of the output of the integrating circuit 13 on the secondary side of the photo coupler 10 gradually decreases from an H level, as shown in Fig. 7. The reason is as follows. The photo coupler 10 transmits a portion of a full-wave rectified waveform on the primary side thereof not higher than 1 V to the secondary side as an OFF signal. As the level of a voltage inputted is increased, a time width or duration of the portion not higher than 1 V becomes narrow and a time width of a portion higher than 1 V becomes correspondingly wide. Therefore, on the secondary side of the photo coupler 10, an OFF (or H level) time becomes short while an ON (or L level) time becomes long and hence a DC component as the average of those levels decreases.

Accordingly, the level of a DC component when the voltage of the power supply 4 for AC input is AC 200 V is different from or lower than the level of a DC component when it is AC 100 V. Therefore, as this level to be taken as a threshold value is lower, an input as ON requires the application of a higher input voltage.

The comparator 12 compares the output level of the AC input circuit 7 with the output level of the threshold value control circuit 11 as a threshold value to output data of the make/break (ON/OFF) condition of the switch 1s as ON if the AC input circuit 7 is lower than the threshold value and as OFF if it is higher than the threshold value.

Fig. 6 is a diagram showing a relationship between the output level waveform of the AC input circuit 7, threshold levels and the output of the comparator 12. A threshold level for AC 100 V and a threshold level for AC 200 V are different from each other and which level is determined by a voltage value of the power supply 4 for AC input. The comparator 12 operates such that it provides an ON output during a period of time when the input level is lower than the threshold value.

From the foregoing, it becomes possible to determine a proper threshold value in accordance with the value of a voltage of the power supply 4 for AC input, thereby enabling a sure input operation.

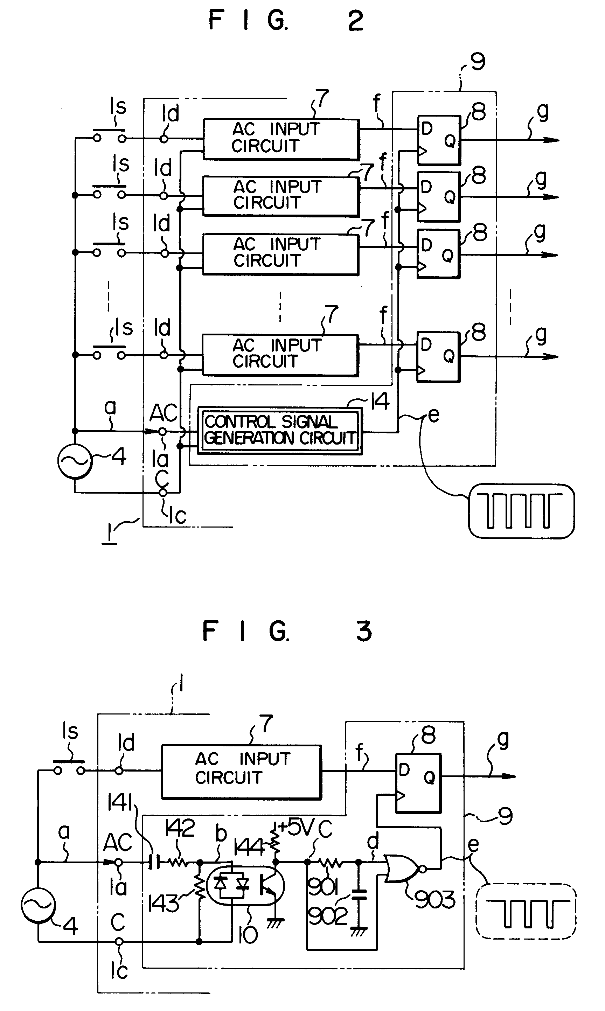

A block diagram of the erroneous input prevention circuit 9 is shown in Fig. 2. In this figure, the comparator 12 of the threshold value control circuit 11 is omitted from the illustration. An input from the AC power supply 4 is applied to the AC input terminal 1a of the input section 1 directly with no intervention of the switch 1s. In the present embodiment, the input data hold circuit 8 connected on the output side of each AC input circuit 7 is a flip-flop circuit. The flip-flop circuit holds an output f of each AC input circuit 7 as input data. On the basis of the output of the AC power supply 4 applied to the AC input terminal 1a, the control signal generation circuit 14 generates a pulse signal e as a first signal a normal condition of the AC power supply 4. This pulse signal e is supplied to a clock terminal of each flip-flop circuit so that it is used for updating of the held data. Therefore, when the AC power supply is turned off, the output of the control signal generation circuit 14 becomes an L level signal as a second signal corresponding to the cut-off condition of the AC power supply 4 or generates no pulse signal e so that the data held by the flip-flop circuit is not updated. Thereby, each hold circuit 8 holds input data from the corresponding AC input circuit 7 before updating.

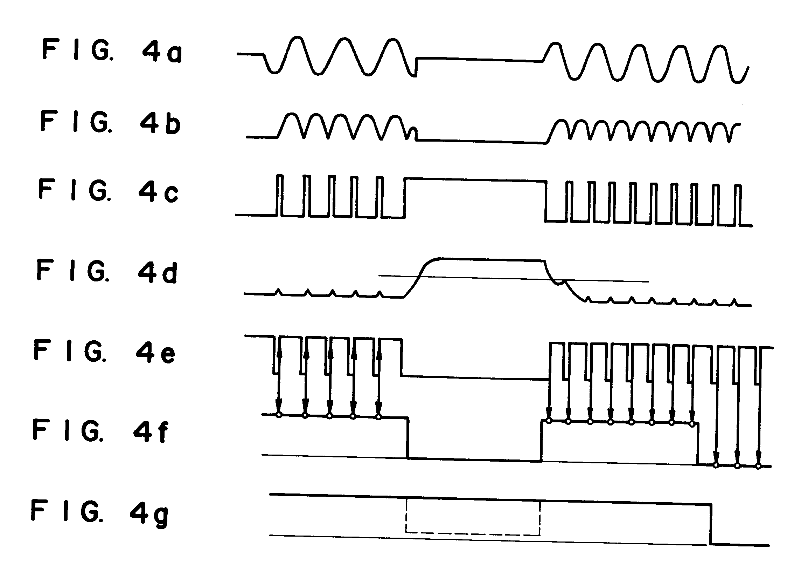

A specific example of the construction of the erroneous input prevention control circuit 9 is shown in Fig. 3. The control signal generation circuit 14 includes a signal isolation portion, a pulse generation portion and a reference voltage level generation portion, as shown in Fig. 8. The erroneous input prevention control circuit 14 includes the signal isolation portion and the reference voltage level generation portion of the control signal generation circuit 14 and further includes the hold circuit 8 connected to the reference voltage level generation portion. In the present embodiment, the signal isolation portion is held in common by the erroneous input prevention control circuit 14 and the threshold value control circuit. Therefore, the explanation of the signal isolation portion of the erroneous input prevention control circuit will be omitted.

In the erroneous input prevention control circuit 9, a circuit on the secondary side of a photo coupler 10 includes a two-input NOR gate 903 which has one input connected to a collector of the photo coupler 10 through an integrating circuit including a resistor 901 and a capacitor 902 and the other input connected to the collector of the photo coupler 10 directly.

An output of the two-input NOR gate 903 is connected to a clock terminal of a flip-flop circuit of the input data hold circuit 8. An output f of the AC input circuit 7 is connected to a data input terminal of the flip-flop circuit.

The operation of the erroneous input prevention circuit 9 will be explained using a control timing chart shown in Figs. 4a-4g. The single-phase AC power supply 4 for AC input is connected between the common terminal 1c and the AC input terminal 1a so that an AC waveform shown by a waveform in Fig. 4a is supplied to the erroneous input prevention circuit 9. This AC waveform is converted by a capacitor 141 and resistors 142 and 143 into a voltage/current value suitable for causing the emission of light from a light emitter portion of the photo coupler 10. On the primary side of the photo coupler 10, since two light emitting diodes are connected in directions reverse to each other, these light emitting diodes emit light at every half cycle so that an output on the primary side of the photo coupler 10 has a full-wave rectified waveform as shown by a waveform in Fig. 4b. On the secondary side of the photo coupler 10, a photo transistor is turned off in the vicinity of a zero level of the full-wave rectified waveform so that pulses of H level as shown by a waveform in Fig. 4c are generated.

When those pulses are applied to the integrating circuit, the pulses are converted into a DC level with fine pulses being erased, as shown by a waveform in Fig. 4d. This DC level shows that an input voltage is applied. The integrating circuit is provided for extracting DC components of an output signal of the photo coupler 10 so that the output of the integrating circuit takes an L level when the input is an ON condition and an H level when it is in an OFF condition. The NOR circuit inputted with the output of the integrating circuit and the collector output of the photo coupler 10 generates a signal (or a waveform shown in Fig. 4e) which takes an H level when both the waveforms in Figs. 4c and 4d take L levels. Thereby, during a period of time when the power supply 4 for AC input is cut off, pulses are not outputted which are sent to the input data hold circuit 8. Such pulses are used by the input data hold circuit 8 as pulses for data updating.

In the integrating circuit, the signal of the photo coupler 10 is transmitted to the input terminal of the NOR gate 903 with a delay time Tc corresponding to a discharging time of the capacitor 902. Therefore, in the case where the AC power supply is cut off due to a power stoppage, the input to the NOR gate 903 is started with a delay of the time Tc immediately from the release from the power stoppage or the restoration of a power supply.

When the power supply 4 for AC input is stopped, the output of the photo coupler remains an H level, as shown by the waveform in Fig. 4c, or no pulses are outputted. When the power supply 4 is restored, pulses are outputted again and are applied to the clock input terminal of the input data hold circuit 8 in which input data supplied from the AC input circuit 7 as shown by a waveform in Fig. 4f is updated at the timing of rise of a waveform in Fig. 4e. A symbol of circle on the waveform in Fig. 4f shows the timing at which the data is read.

It is apparent from the foregoing that during a period of time when the power supply 4 for AC input is cut off, the generation of data updating pulses is stopped so that the input data hold circuit 8 holds input data from the AC input circuit 7 immediately before the power supply is cut off. Accordingly, even if the power supply 4 for AC input is cut off, the output of the AC input circuit 7 after having supplied to the input data hold circuit 8 can hold data before the cut-off of the power supply, as shown by a waveform in Fig. 4g. As a result, a normal input signal g can be taken out.

Fig. 8 shows a circuit diagram showing the construction of the input circuit including the erroneous input prevention circuit and the threshold value control circuit explained above. The construction of the control signal generation circuit 14 including a signal isolation portion, a pulse generation portion and a reference voltage level generation portion is simplified by forming the erroneous input prevention circuit 9 and the threshold value control circuit 11 in such a manner that the isolation portion is held in common by them. With the circuit construction of the present embodiment, the prevention of an erroneous input upon AC power supply cut-off and the automatic setting of a proper threshold value can be made.

With the above construction, it is possible to prevent an erroneous input signal that when the power supply 4 for AC input is cut off, an input is taken in as an OFF signal notwithstanding that the switch 1s is in an ON condition. Also, it is possible to obtain a more accurate input signal of the ON/OFF condition by checking an inputted voltage level of the power supply 4 for AC input to automatically determine a proper ON/OFF threshold value from the voltage level and comparing the respective output levels of the AC input circuits with the determined threshold value by the comparators.

Namely, an input can be made with no delay of an operation and even for a short OFF signal by inputting a voltage of the power supply 4 for AC input as it is, to make a control to prevent an erroneous input signal during a period of time when the power supply is cut off. Also, it becomes possible to cope with a wide voltage range of the power supply 4 for AC input by inputting the voltage of the power supply for AC input, checking the level of the inputted voltage to detect an input voltage range and determining from the detected voltage range or value a proper threshold value (which may be about a half of the voltage of the power supply for AC input).

## Claims

1. A programmable controller comprising a memory section (5) for storing a control program, an operating section (3) connected to said storage section for performing an operation in accordance with said control program, an input section (1) connected to said operating section for taking in a make/break signal of a contact (1s) provided in an external input device, and an output section (2) connected to said operating section for outputting a signal to drive an external load, in which said input section (1) includes:
a first input terminal (1a) connected to a power supply (4) which supplies a voltage to said contact;
a second input terminal (1d) to which the make/break signal of said contact is inputted through said contact from said power supply;
a first circuit (14) connected to said first input terminal for generating a first signal corresponding to a normal condition of said power supply and a second signal corresponding to an abnormal condition of said power supply;
a second circuit (7) connected to said second input terminal for converting a signal inputted through said contact into a third signal corresponding to the make/break of said contact; and
an input data hold circuit (8) connected to an output of said second circuit for holding said third signal when said second signal is received from said first circuit.

2. A programmable controller according to Claim 1, wherein said input section further includes a reference value generation circuit (13) connected to said first input terminal (1a) for generating a reference value based on an input voltage value of said power source (4) in the normal condition and a comparator (12) connected to said reference value generation circuit for comparing the output of said second circuit (7) with said reference value, the output of said second circuit being supplied through said comparator to said input data hold circuit (8).
